# FASCICULE DE BREVET EUROPEEN

(11) **EP 2 904 418 B1**
(45) Date de publication et mention de la délivrance du brevet: **04.01.2017**
(21) Numéro de dépôt: 13795815.3
(22) Date de dépôt: 01.10.2013
(51) Int. Cl.: B64D 25/00, B64D 45/00, G01S 5/02

(54) **SYSTEME DE BALISE DE DETRESSE POUR AERONEF OU AUTRE VEHICULE**
NOTFUNKBAKENSYSTEM FÜR FLUGZEUGE ODER ANDERE FORTBEWEGUNGSMITTEL
DISTRESS BEACON SYSTEM FOR AN AIRCRAFT OR ANOTHER VEHICLE

(30) Priorité: 02.10.2012 FR 1259316
(43) Date de publication de la demande: 12.08.2015
(73) Titulaire: ELTA, 31035 Toulouse cedex 1 (FR)
(72) Inventeur: CAVAN, Alain, F-31100 Toulouse (FR); PORTES, Thierry, F-31590 Lavalette (FR); CRESP, Claude, F-31770 Colomiers (FR); FLOQUET-PICARD, Carole, F-31770 Colomiers (FR)
(74) Mandataire: Ipside
(86) Numéro de dépôt international: PCT/FR2013/052329
(87) Numéro de publication internationale: WO 2014/053762

(56) Documents cités:
- WO-A1-2011/010942
- US-A1- 2012 200 460
- US-B2- 7 916 084

## Description

### Domaine technique.

La présente invention est relative à un système de balise de détresse automatique prévu pour équiper notamment un aéronef tel que non limitativement, avion, planeur, ultraléger motorisé, hélicoptère, giravion, dirigeable et autres engins volants. Ce système de balise de détresse automatique peut équiper également tout autre genre de véhicule par exemple des navires ou des véhicules terrestres.

### État de la technique antérieure.

On connaît de l'état de la technique des balises prévues pour équiper des engins volants ou autres. Ces balises sont activées, soit automatiquement lors d'un accident aérien, soit manuellement dans une situation estimée critique afin de signaler à des moyens de secours distants les données d'identification et la position géographique de l'aéronef en détresse.

Les réglementations nationales fixent le nombre et l'emplacement des balises de détresse devant se trouver dans chaque véhicule. Généralement, les aéronefs sont équipés de deux balises, à savoir une balise dite automatique et une balise de survie portable. Ces balises, lorsqu'elles sont actives, émettent des signaux hertziens de détresse prévus pour être reçus par une constellation de satellites faisant partie par exemple du système COSPAS-SARSAT.

La balise automatique est une balise de détresse intégrée à l'équipement de l'aéronef et connectée à une antenne d'émission extérieure de l'aéronef. Elle est fixée généralement à la structure primaire de l'aéronef, par exemple sous un faux-plafond. Elle est dotée de différents modules fonctionnels, notamment pour déclencher son activation et assurer son identification. Les modules électroniques sont enfermés dans sa coque, tandis qu'un détecteur de chocs intégré est monté sur celle-ci. Elle est activable à l'aide d'une télécommande par une action volontaire du pilote depuis le cockpit, ou bien elle se déclenche automatiquement en cas de choc violent, par l'entremise du détecteur de choc intégré.

La balise de survie est quant à elle amovible. Elle est habituellement conservée dans la cabine de l'aéronef, à portée de main des membres de l'équipage. Elle est prévue pour être emportée et/ou actionnée en cas de situation estimée critique par les membres de l'équipage, ou même par des rescapés en cas d'accident. Elle est dotée de modules fonctionnels enfermés dans sa coque, pour déclencher son activation, assurer son identification et sa localisation. Elle peut aussi être déclenchée par un capteur sensible à la présence de l'eau.

### Exposé de l'invention.

### Problème technique.

L'installation et la maintenance de plusieurs types de balises sur les aéronefs comportent des inconvénients à plusieurs niveaux. Un inconvénient est que l'exploitant est obligé de gérer plusieurs références, ce qui augmente le temps nécessaire et la complexité du suivi, notamment lors des opérations de maintenance et du stockage. (Le document US2012/200460 divulgue une procédé de surveillance du fonctionnement d'une balise de déstresse.)

La disponibilité de pièces durant la fabrication des
balises ou des pièces détachées pour la maintenance, requiert des moyens d'autant plus importants qu'il existe de types de balises. La formation des personnels est également plus lourde. La présence de différents types de balises dans un aéronef est donc source de surcoûts d'exploitation.

Un autre inconvénient découle des contraintes inhérentes à l'installation des balises et à leur maintien en conditions opérationnelles qui nécessite un accès régulier à la balise et son retrait pour inspection et/ou actualisation du paramétrage. Ces opérations imposent une intervention sur sa connexion électrique au système avionique et aux antennes, sur laquelle repose toute l'interface avec l'aéronef (câblage, alimentation par exemple). Or, ces opérations se répètent à intervalle de temps régulier pour les vérifications obligatoires de sécurité. Le risque n'est pas nul d'une mauvaise remise en connexion avec le système avionique de l'aéronef et autres équipements par exemple l'antenne extérieure, après l'inspection ou d'une détérioration des organes de connexion. Ce risque demande à être totalement supprimé ou pour le moins fortement réduit.

Un autre problème vient du fait que chaque balise doit être identifiable et aussi permettre d'identifier l'aéronef dont elle provient même si elle en est éloignée (que ce soit une balise automatique ou une balise de survie). À l'heure actuelle, un paramétrage se fait pour chaque balise en usine ou en atelier et doit être recommencé lorsque l'aéronef change d'exploitant (ou autres données à insérer dans la balise), entraînant une perte de temps et un nouveau risque pour la fiabilité de la connexion au système avionique de l'aéronef et autres équipements tels qu'antennes.

### Solution technique.

La présente invention (définie dans les revendications) a pour but d'apporter une solution aux problèmes sus évoqués en proposant un moyen permettant de transformer de manière réversible, une balise de survie en une balise automatique de détresse. Pour ce faire, les inventeurs ont conçu un modèle de balise et un support associé qui coopèrent pour assurer la fonction de balise automatique ou celle de balise de survie, selon la situation. Le support est destiné à être fixé à la structure de l'aéronef tandis que la balise sera montée amovible sur le support pour former un système de balise automatique. Le système de balise automatique selon l'invention peut ainsi être qualifié génériquement de "balise de détresse". La balise associée à son support sera désignée comme "système de balise de détresse automatique".

Ainsi, l'opérateur ne gère plus qu'un modèle de balise, ce qui répond à la problématique du stockage, de la maintenance et de la disponibilité des pièces, et allège également la formation des personnels concernés.

Le système de balise de détresse automatique selon l'invention comporte donc une balise amovible et un support fixe, la balise amovible, en combinaison avec le support remplissant toutes les fonctions d'une balise automatique lorsqu'elle est placée sur ledit support, et toutes les fonctions d'une balise de survie quand elle est séparée du support. Cette polyvalence est obtenue grâce à un support particulier dans lequel sont localisées toutes les fonctions principales du système automatique *et autres équipements,* ce qui permet de centraliser là toute l'interface avec l'aéronef, tel que câblage, alimentation par exemple.

Les fonctions principales étant déportées sur le support, l'installation du système et le maintien en conditions opérationnelles sont facilités. Une fois le support fixé sur la structure primaire de l'aéronef, l'opérateur peut installer et retirer la balise amovible en un geste, simplement et sans outils, aussi souvent que nécessaire. Il n'a pas besoin de démonter le support fixé à l'aéronef. Les connecteurs assurant l'interface avec le système avionique de l'aéronef et autres équipements restent branchés, ce qui réduit sensiblement les problèmes de détérioration ou de mauvaise connexion.

Ainsi, la présente invention a pour objet un système de balise de détresse automatique destiné à équiper un aéronef, un navire et autres véhicules, ledit système comprenant :
- un support prévu pour être fixé de manière rigide à la structure de l'aéronef, et
- une balise prévue pour être montée de manière amovible sur ce support, lequel support comprend une unité électronique de gestion dotée d'un premier moyen de connexion au bus de données et de commande de l'aéronef pour recevoir des données de ce bus ainsi que des ordres d'activation de la balise, et d'un second moyen de connexion à la balise pour lui transmettre des données et des ordres d'activation, ladite balise étant dotée au moins d'un module mémoire pour le stockage des données transmises et d'un module d'émission hertzienne apte à être connecté via le support à une antenne d'émission extérieure de l'aéronef.

En raison de cette disposition, la balise amovible et son support associé réalisent un système de balise de détresse automatique, la balise en combinaison avec le support, faisant fonction de balise automatique de détresse lorsqu'elle est mise en place sur le support. Ce faisant, elle est apte à faire fonction de balise de survie, pour remplir ce rôle en cas d'incident, si elle n'est pas placée sur le support objet de l'invention. Lorsqu'elle est en place dans le support, la balise est connectée à l'unité électronique de gestion que comporte le support et dans le cas contraire, elle constitue une balise de survie autonome.

De plus en cas de panne de la balise, un remplacement aisé et rapide par une balise de survie compatible devient maintenant possible, s'agissant d'un aéronef dont le vol ne peut être autorisé que s'il est équipé d'une balise automatique, la possibilité de remplacement rapide évite des immobilisations au sol coûteuses en soi.

Selon une autre caractéristique de l'invention, le support comporte de plus au moins un moyen de détection d'événements anormaux connecté à l'unité électronique de gestion, en vue de l'activation de ladite balise.

Ainsi de manière originale, le support centralise toutes les fonctions normalement présentes sur une balise automatique, notamment les éléments de connexion à l'alimentation électrique et aux bus correspondants de l'aéronef. Le support comprend donc au moins un moyen de détection d'évènements anormaux, généralement au moins un détecteur de choc. De manière complémentaire, le support contient une unité électronique de gestion permettant la gestion de la détection d'évènements anormaux en vue de l'activation du système de balise automatique si un évènement anormal est détecté. L'unité électronique de gestion est dotée d'un premier moyen de connexion au bus de données et de commande de l'aéronef pour recevoir des données de ce bus ainsi que des ordres d'activation de la balise amovible, et d'un second moyen de connexion à la balise amovible pour lui transmettre des données et des ordres d'activation.

La balise est quant à elle dotée, notamment, d'un module mémoire pour le stockage des données qui lui sont transmises depuis le bus de données de l'aéronef via le support. Elle comporte aussi un module d'émission hertzienne apte à être connecté via le support à une antenne d'émission extérieure de l'aéronef, pour la transmission de l'information de détresse vers les satellites. En cas de défaut de connexion à l'antenne extérieure de l'aéronef, une antenne interne de la balise prend automatiquement le relais pour assurer la transmission de ladite information de détresse.

La connexion de la balise amovible au support permet de transférer à la mémoire de cette balise des données importantes relatives au vol et au fonctionnement des équipements de l'aéronef, ainsi que des données relatives à la position géographique de l'aéronef. Ces données sont stockées dans le module mémoire et permettent une activation de la balise. Ladite activation permet de générer un signal de détresse qui est alors transmis à la constellation de satellites. Ce signal de détresse comporte notamment les coordonnées géographiques de l'aéronef au moment où il est émis. L'alerte est ainsi donnée quand l'aéronef subit un accident ou un incident assez grave pour avoir provoqué son évacuation. On note que grâce à la présente invention, il est possible aussi de générer une alerte lorsqu'un aéronef est en situation critique, par exemple dans le laps de temps précédant un accident.

Les coordonnées géographiques de la position de l'aéronef sont délivrées par le bus de données de l'aéronef ou bien, de manière alternative par le système de balise automatique, l'aéronef et le système de balise étant équipés chacun d'un système de géolocalisation, par exemple du type GPS (acronyme de Global Positioning System pour système de localisation mondial). De préférence le système de géolocalisation est intégré à la balise. En variante, un système de géolocalilsation est également intégré au support.

Selon une caractéristique préférée du système de balise selon l'invention, l'unité électronique de gestion que comporte le support comprend un module d'activation, un module de communication de données et un module d'alimentation électrique. Ce module sera avantageusement conforme aux normes portant sur les bus et réseaux internes aux aéronefs et les protocoles utilisés dans l'aéronautique. Il sera de préférence conforme à la norme bien connue sous le nom de protocole ARINC 429 défini par l'AEEC *(Airlines Electronic Engineering Committee*).

De manière avantageuse, dans le système de balise selon l'invention, le ou chaque moyen de détection d'évènements anormaux équipant le support comprend un détecteur de choc, ce détecteur étant connecté au module d'activation de l'unité électronique de gestion que comporte le support.

Selon un mode de réalisation préféré du système de balise selon l'invention, le détecteur de choc est un accéléro-contact orientable. Ce type de détecteur est connu dans le domaine concerné, de sorte que l'homme de l'art saura choisir le modèle le plus adapté.

Conformément à une autre caractéristique du système de balise selon l'invention, le support contient un transducteur électro-acoustique connecté au module d'activation. Ce dispositif permet de repérer le système de balise lorsqu'il se trouve dans un environnement opaque aux radiofréquences, afin de le détecter même sous l'eau.

Selon encore une caractéristique particulièrement avantageuse de l'invention, la balise comporte un moyen d'identification qui lui est propre et le support comporte un moyen d'identification qui lui est propre. Chaque partie du système de balise automatique peut donc être identifiée séparément, que ces parties soient associées ou éloignées l'une de l'autre. Les moyens d'identification sont par exemple des puces RFID (acronyme de Radio-Frequence IDentification pour identification radiofréquence). Les moyens d'identification de la balise et du support sont porteurs d'un code identifiant ou données d'identification, l'identifiant pouvant être identique ou différent, mais en tout état de cause à étant connu et répertorié.

Additionnellement, selon une autre caractéristique de l'invention, la balise comporte en outre un module d'identification, lequel permet la lecture sans fils du moyen d'identification de la balise et, de manière prioritaire, lorsque cette dernière est en place sur le support, la lecture du moyen d'identification de ce support.

Ce module est avantageusement un module RFID, apte à lire sans contact des moyens d'identification tels que des puces RFID. Il peut être inséré à proximité de la puce équipant la balise, et permettre la lecture sans contact de la puce RFID de la balise. Il peut aussi, lorsque cette balise est en place sur le support, réaliser la lecture de la puce RFID de ce dernier. Dans ce dernier cas, les données d'identification inscrites dans la puce RFID du support, qui sont lues de manière prioritaire par le module RFID de la balise, sont considérées comme les données d'identification d'une balise automatique usuelle. Ces données d'identification étant portées par le support, elles pourront être lues sans outil par le module RFID d'une autre balise (suite à un remplacement par exemple). Aucun nouveau paramétrage des données de la balise n'est nécessaire à bord de l'aéronef, ce qui simplifie grandement la maintenance.
Selon une autre caractéristique de l'invention, le support est alimenté en énergie électrique par une source d'énergie électrique externe qui peut être une des sources d'énergie de l'aéronef.

Alternativement, selon une autre caractéristique de l'invention, le support intègre en son sein une source d'énergie électrique sous forme de batteries.

Selon une autre caractéristique de l'invention, le support est équipé d'un détecteur de pression d'eau connecté électriquement à l'unité électronique de gestion, en vue de l'émission d'un signal de détresse si une pression d'eau est détectée (immersion).

Selon une autre caractéristique de l'invention, le support intègre un transducteur électro-acoustique du type de ceux connus sous le nom de "pinger". Ce transducteur électro-acoustique est alimenté par la source d'énergie électrique de la balise ou éventuellement par la source d'énergie électrique du support si une telle source d'énergie est présente dans le support. Ce transducteur électroacoustique sera activé par l'unité électronique de gestion que comporte le support.

Selon une autre caractéristique de l'invention, la balise est dotée de moyens de déclenchement manuel d'un signal de détresse. Ainsi la balise après avoir été extraite de son support est utilisable en tant que balise de survie portable.

On dispose ainsi d'un système de balise unique qui facilite la gestion des références pour l'utilisateur, et qui permet un gain de temps en maintenance, l'échange de balise étant très rapide. L'installation est facile dans la mesure où les connexions s'effectuent uniquement sur le support. En outre, la masse globale est très faible et le volume occupé est réduit, l'ensemble balise et support étant très plat et prenant place aisément dans l'aéronef.

### Bref exposé des figures et des dessins.

D'autres avantages, buts et caractéristiques de l'invention apparaîtront à la lecture de la description d'une forme préférée de réalisation, donnée à titre d'exemple non limitatif en se référant aux dessins annexés en lesquels :

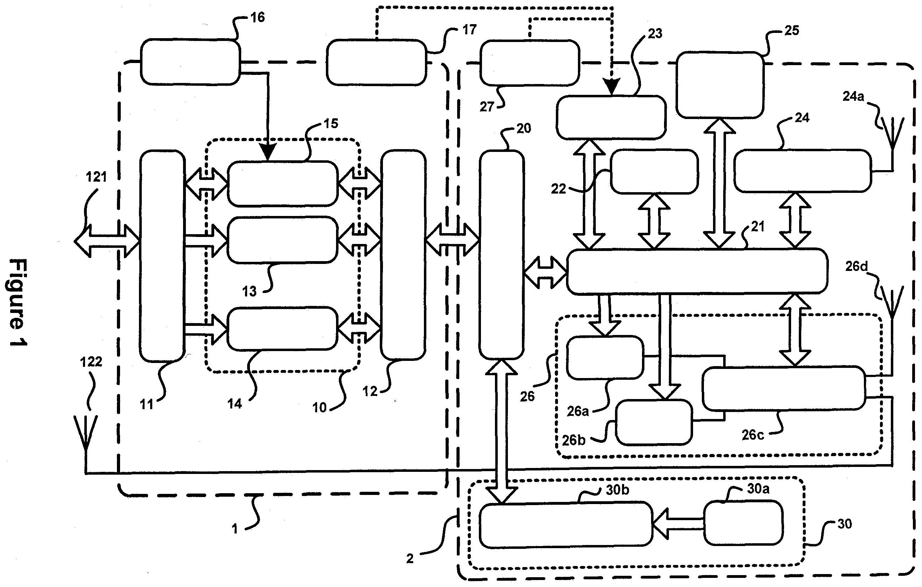

- la figure 1 est un schéma fonctionnel du système de balise de détresse automatique selon l'invention.
- les figures 2a et 2b sont des vues schématiques d'une balise de survie seule (fig.2a) et de la même balise placée sur un support fig.2b), constituant un système de balise de détresse automatique selon l'invention, tel qu'il apparaît aux utilisateurs.

### Meilleure manière de réaliser l'invention.

Tel que représenté, le système de balise de détresse automatique selon l'invention est prévu pour équiper un véhicule qui peut être de manière non limitative un aéronef. Il comprend un support 1 prévu pour être fixé à la structure 120 de l'aéronef et une balise 2 prévue pour être engagée de manière amovible dans le support 1 et remplir ainsi en combinaison avec ce support 1, les fonctions d'une balise automatique de détresse. Dissociée du support 1, la balise 2 constitue une balise de survie.
Le support 1 comprend un boîtier de protection 100, doté d'un logement ouvert pour recevoir la balise 2.

Le support 1 est équipé d'une unité électronique de gestion 10 connectée par un moyen de connexion au bus de données et de commande 121 de l'aéronef. Ce moyen de connexion est constitué avantageusement par un module 11 d'interface et de protection adéquat contre la foudre, les perturbations liées aux téléphones portables ou autres, et assure l'interface physique avec le bus 121 et plus généralement avec le système avionique de l'aéronef et autres équipements par exemple antennes, pour accéder à certaines données. Il a été conçu également pour protéger le système de balise de toutes les perturbations électriques induites par l'environnement du système de balise automatique, lorsqu'il est dans l'aéronef. Il répond aux normes en vigueur sur les standards de protection notamment.

L'unité électronique de gestion 10, lorsque la balise 2 est installée dans le support 1, est également connectée via un second moyen de connexion 12 du support 1, à un moyen de connexion 20 que comporte la balise 2. Ces deux moyens de connexion 12 et 20 sont constitués chacun par un module interface et de protection adéquat.

L'unité électronique de gestion 10 comprend un module de communication de données 13 de type ARINC 429 permettant de faire l'interface avec le bus de données 121. Elle comprend aussi un module d'alimentation électrique 14 et un module d'activation 15. Les modules susmentionnés de l'unité électronique de gestion 10 sont connectés aux modules interface 11 et 12, assurant la relation entre le support 1 et respectivement, le système avionique de l'aéronef et autres équipements tels qu'antennes et la balise 2.

Un détecteur de choc 16, monté sur la coque 100 du support 1, est connecté électriquement au module d'activation 15. Il est constitué de préférence par un accéléro-contact orientable fixé de manière rigide à la coque de protection 100 du support 1. De cette manière cet accéléro-contact orientable subit les différentes accélérations transmises à la structure de l'aéronef. À ce module d'activation peut être connecté un capteur de pression d'eau ainsi qu'un transducteur électro-acoustique permettant d'émettre un signal détectable sous l'eau.

Le module d'alimentation électrique 14 du support 1 est apte à fournir l'énergie nécessaire au support 1 et à éventuellement gérer la recharge de la source d'énergie électrique équipant la balise 2. La recharge de cette source d'énergie est effectuée à partir de l'énergie électrique fournie par l'alimentation électrique de l'aéronef. Le module d'alimentation électrique 14 pourra gérer aussi la recharge d'une source d'énergie électrique que peut comporter le support 1.

Le module d'activation 15 du support 1 est apte à activer la balise 2 afin que cette dernière émette un signal de détresse en cas de situation anormale qui sera reçu par une constellation satellitaire et transmis ensuite à des stations au sol. Un signal de détresse peut aussi être généré et transmis au sol, ou stocké dans le module mémoire 22 pour une prise en compte ultérieure. L'activation peut être déclenchée lorsqu'un choc est détecté, ou par commande manuelle télécommandée par le pilote ou par un autre système connu estimant que la situation le nécessite.

La balise 2 comprend un bloc énergie 30 et une unité de contrôle et de calcul 21 agencée autour d'un microcontrôleur. À cette unité de contrôle et de calcul 21 est connecté le module interface et de protection 20 de la balise 2. Sont également connectés à cette unité de contrôle et de calcul 21, un module mémoire 22, un module RFID d'identification 23, un module de géolocalisation 24 apte à indiquer les coordonnées géographiques de l'aéronef ou de la balise, une interface homme-machine 25, et un module 26 d'émission hertzienne.

Le module mémoire 22 est par exemple du type non volatile. Dans ce module mémoire 22 sont stockées les valeurs relatives aux différents paramètres du vol utiles notamment à l'analyse et à la compréhension des avaries et des accidents. Dans ce module mémoire 22 est également stockée à intervalles de temps réguliers ou en continu, la position géographique de l'aéronef. Ces données reçues du bus 121 de l'aéronef par l'unité électronique de gestion 10 que comporte le support 1, sont transmises à la balise amovible 2, et plus particulièrement à l'unité de commande et de calcul 21 via les modules interface et de protection 12 et 20. Ensuite ces données sont stockées dans le module mémoire 22. Le module mémoire 22 enregistre et archive périodiquement les données afin de constituer un historique de celles-ci.

Le module RFID d'identification 23 permet la lecture des informations contenues dans des puces RFID 17 et 27. La puce RFID 17 est intégrée au support 1 et contient un code d'identification propre au support 1. La puce RFID 27 est intégrée à la balise 2 et contient un code d'identification de la balise 2. Les puces RFID 17 ET 27 sont réinscriptibles lors d'une opération de maintenance.

Lorsque la balise 2 est connectée au support 1, le module RFID d'identification 23 lit les informations contenues dans la puce RFID 17 du support 1. Lorsque la balise 2 et le support 1 sont séparés, le module RFID d'identification 23 lit les informations contenues dans la puce RFID 27 que comporte la balise 2.

Lorsque la balise 2 est en place sur le support, les données relatives aux coordonnées géographiques de l'aéronef sont prélevées sur le bus de données 121 de l'aéronef et le module de géolocalisation 24 est désactivé par l'unité de contrôle et de calcul 21. La séparation de la balise 2 du support 1 entraîne la réactivation du module de géolocalisation 24 par l'unité de contrôle et de calcul 21.

Le module de géolocalisation 24 peut être de tout type connu. Il est connecté à une antenne 24a interne à la balise 2 (antenne de type GNSS pour Géolocalisation et Navigation par un Système de Satellites). Ce module 24 est apte à déterminer, à partir des signaux qu'il reçoit d'une constellation satellitaire appropriée, les coordonnées géographiques de l'aéronef ou de la balise. Ces coordonnées sont périodiquement stockées par l'unité de contrôle et de calcul 21 dans le module mémoire 22.

L'interface homme-machine 25 est composée d'un afficheur et d'un clavier comprenant plusieurs touches. L'afficheur permet l'affichage entre autres de l'information de localisation, de la prise en compte de l'alerte par le système satellite et le sol. Ce retour d'information est effectué via le module de géolocalisation 24, l'affichage de l'identification permettant de contrôler le code identifiant de la balise 2 sans outils spécifiques.

Le module d'émission hertzienne 26 émet les signaux de détresse, sur les fréquences allouées à COSPAS-SARSAT, ces signaux pouvant receler notamment les coordonnées géographiques de l'aéronef et éventuellement les codes d'identification du support et /ou de la balise, inscrits respectivement dans les puces RFID 17 et 27. Ce module d'émission 26 est associé par connexion électrique à l'antenne UHF et VHF 26d de la balise 2. Il est également connecté par l'entremise du support 1 à l'antenne externe UHF et VHF 122 de l'aéronef lorsque la balise 2 est installée dans ledit support 1.
Le module d'émission hertzienne 26 comporte des modules d'émission VHF et UHF 26a, 26b, placés sous le contrôle d'un module de contrôle et de gestion 26c des antennes VHF/UHF 26d de la balise 2 et 122 de l'aéronef.

Le bloc énergie 30 de la balise 2 est un bloc d'alimentation électrique qui comprend une ou plusieurs batteries électriques 30a et une carte électronique mémoire 30b qui enregistre les consommations effectuées sur les batteries. Les batteries 30a peuvent être de type non rechargeable (piles), ou alternativement rechargeables.
La balise 2 est munie d'un voyant lumineux, tel qu'un voyant à éclats, ainsi que des zones rétro-réfléchissantes.

La balise 2 est avantageusement équipée d'un détecteur d'eau, connu en soi, connecté électriquement à l'unité de contrôle et de calcul (21) afin d'assurer un déclenchement automatique d'un signal de détresse en présence d'eau et ce qu'elle soit en place sur le support 1 ou séparée de ce support.

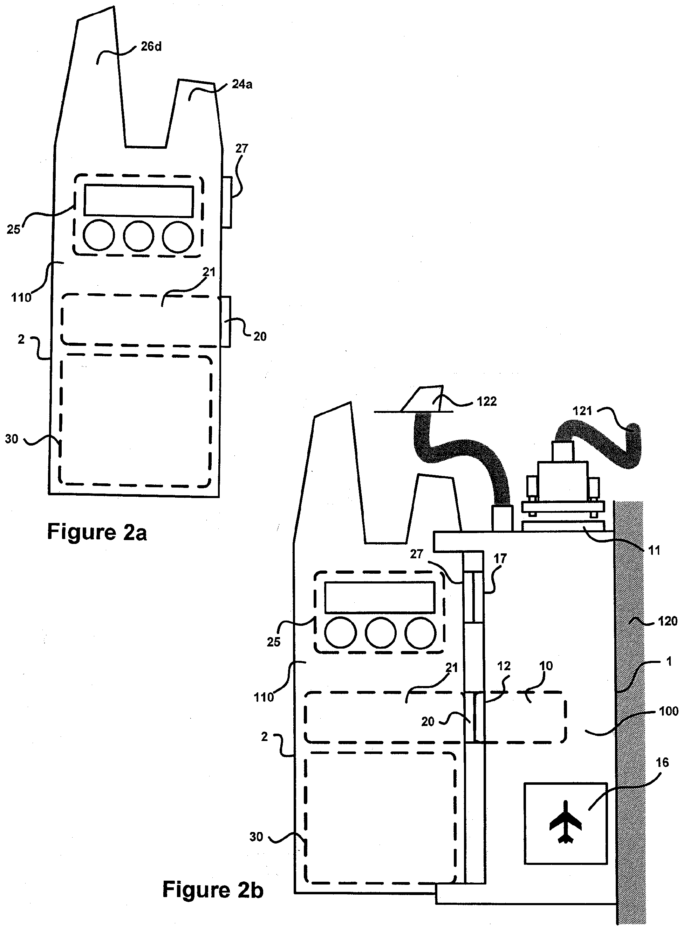

La figure 2a représente une balise 2 de détresse de type balise de survie, tandis que la figure 2b représente un système de balise de détresse automatique comportant la balise 2 et son support 1, tels que décrits précédemment. Comme on le voit sur les figures 2a et 2b, la balise 2 est identique dans les deux cas.

Une première balise 2 dite de survie sera placée dans la cabine de l'aéronef, soit fixée à un support neutre dont la seule fonction est de la maintenir en place pour éviter qu'elle ne heurte la structure ou un objet voisin, soit glissée dans une house et rangée dans un coffre à bagage. Elle est inactive tant que personne ne l'a activée, selon les procédures applicables en cas d'accident ou qu'une présence d'eau soit détectée.

Une seconde balise 2, dite automatique, sera quant à elle fixée (de manière amovible) sur un support 1, lui-même étant fixé (de manière inamovible) à la structure de l'aéronef. Les puces RFID d'identification 17 et 27 du support 1 et de la balise 2 se trouvent alors à proximité, de sorte que le module RFID d'identification 23 lit en priorité le contenu de la puce RFID 17, c'est-à-dire le code d'identification du support 1. Les modules d'interface et de protection 12 et 20 respectifs du support 1 et de la balise 2 sont connectés et font transiter les données nécessaires au fonctionnement du système.

Une fois retirée du support 1 la balise 2 constitue une balise de détresse de survie et est apte à être activée manuellement pour déclencher un signal de détresse prévu pour être reçu par une constellation satellitaire, ce signal de détresse contenant notamment les données relatives aux coordonnées géographiques de la balise et le code d'identification de la balise. À cet effet, la balise comporte des moyens de déclenchement manuel du signal de détresse, ces moyens étant constitués par une touche dédiée du clavier de l'interface homme-machine 25, par cette interface homme-machine 25, et par l'unité de contrôle et de calcul 21. Dès qu'elle détecte l'appui sur la touche dédiée au déclenchement du signal de détresse, l'unité de contrôle et de calcul 21 active le module d'émission hertzienne 26 en vue de l'émission d'un signal de détresse et lit dans le module mémoire 22 les données relatives aux coordonnées géographiques de la balise, et par l'intermédiaire du module RFID d'identification 23, lit le code d'identification de la balise contenu dans la puce RFID 27. Ces informations sont transmises par le signal de détresse à la constellation satellitaire.

Enfin y a lieu de noter que le domaine d'application de l'objet de la présente invention n'est pas limité aux seuls aéronefs. Au contraire, sans sortir du cadre de la présente invention, l'objet de la présente invention peut équiper tout genre de véhicule aérien, terrestre ou maritime.

## Revendications

1. Système de balise de détresse automatique destiné à équiper un aéronef, un navire et autres véhicules comprenant un support (1) prévu pour être fixé de manière rigide à la structure de l'aéronef, et une balise (2) prévue pour être montée de manière amovible sur ce support (1), lequel support (1) comprend une unité électronique de gestion (10) dotée d'un premier moyen de connexion (11) au bus de données et de commande (121) de l'aéronef pour recevoir des données de ce bus ainsi que des ordres d'activation de la balise (2), et **caractérisé en ce que** l'unité électronique de gestion est dotée d'un second moyen de connexion (12) à la balise (2) pour lui transmettre des données et des ordres d'activation, et **caractérisé en ce que** ladite balise (2) est dotée au moins d'un module mémoire (22) pour le stockage des données transmises et d'un module d'émission hertzienne (26) apte à être connecté via le support (1) à une antenne d'émission extérieure de l'aéronef (122).

2. Système de balise selon la revendication précédente, **caractérisé en ce que** le support (1) comporte au moins un moyen de détection d'événements anormaux connecté à l'unité électronique de gestion (10), en vue de l'activation de la balise (2).

3. Système de balise selon la revendication 1, **caractérisé en ce que** l'unité électronique de gestion (10) comprend un module d'activation (15) de la balise (2), un module de communication de données (13) assurant l'interface avec le bus de données (121) et un module d'alimentation (14) en énergie électrique.

4. Système de balise selon l'une quelconque des revendications précédentes, **caractérisé en ce que** le ou chaque moyen de détection d'évènements anormaux équipant le support (1) comprend un détecteur de choc (16), ce détecteur étant connecté au module d'activation (15).

5. Système de balise selon la revendication précédente, **caractérisé en ce que** le détecteur de choc (16) est un accéléro-contact orientable.

6. Système de balise selon l'une quelconque des revendications précédentes, **caractérisé en ce que** le support (1) contient un transducteur électro-acoustique connecté au module d'activation (15).

7. Système de balise selon l'une quelconque des revendications précédentes, **caractérisé en ce que** le support (1) est alimenté en énergie électrique par l'une des sources d'énergie du véhicule.

8. Système de balise selon l'une quelconque des revendications 1 à 6, **caractérisé en ce que** le support (1) est doté de sa propre source d'énergie électrique.

9. Système de balise selon l'une quelconque des revendications précédentes, caractérisé ce que la balise (2) est dotée de moyens de déclenchement manuel d'un signal de détresse.

10. Système de balise selon la revendication selon l'une quelconque des revendications précédentes, **caractérisé en ce que** la balise (2) comprend de plus une unité de contrôle et de calcul (21) à laquelle est connecté électriquement le module mémoire (22).

11. Système de balise selon l'une quelconque des revendications précédentes, **caractérisé en ce que** la balise (2) comporte un moyen d'identification (27) qui lui est propre, et le support (1) comporte un moyen d'identification (17) qui lui est propre.

12. Système de balise selon les revendications 10 et 11 prises dans leur ensemble, **caractérisé en ce que** la balise (2) comporte en outre un module d'identification (23) apte à lire les informations contenues dans le moyen d'identification (27) de la balise (2) et, lorsque cette balise (2) est en place sur le support (1), apte à lire les informations contenues dans le moyen d'identification (17) du support (1), ledit module d'identification (23) étant connecté électriquement à l'unité de contrôle et de calcul (21).

13. Système de balise selon l'une quelconque des revendications 9 à 11, **caractérisé en ce que** la balise (2) est équipée d'un module de géolocalisation (24) connecté à l'unité de contrôle et de calcul (21), apte à indiquer les coordonnées géographiques du véhicule ou de la balise.

14. Système de balise selon l'une quelconque des revendications 9 à 12, **caractérisé en ce que** la balise (2) est équipée d'une interface homme-machine (25) composée d'un écran d'affichage et d'un clavier, ladite interface homme-machine étant connectée à l'unité de contrôle et de calcul (21).

15. Système de balise selon les revendications 9 à 14 prises dans leur ensemble, **caractérisé en ce que** les moyens de déclenchement manuel de la balise sont constitués par une touche dédiée du clavier de l'interface homme-machine (25), par ladite interface homme-machine (25), et par l'unité de contrôle et de calcul (21) laquelle est apte, dès qu'elle détecte l'appui sur la touche dédiée au déclenchement du signal de détresse, à activer le module d'émission hertzienne (26) en vue de l'émission d'un signal de détresse, à lire dans le module mémoire (22) les données relatives aux coordonnées géographiques de la balise (2), et par l'intermédiaire du module d'identification (23), à lire le code d'indentification de la balise (2) contenu dans le moyen d'identification (27), pour que le signal de détresse émis contienne les coordonnées géographiques de la balise (2) et le code d'identification de cette balise (2).

16. Système de balise selon l'une quelconque des revendications 9 à 15, **caractérisé en ce que** la balise (2) est équipée d'un détecteur d'eau connecté électriquement à l'unité de contrôle et de calcul (21).

17. Système de balise selon l'une quelconque des revendications 9 à 16, **caractérisé en ce que** la balise comprend un bloc d'énergie (30) comprenant une ou plusieurs batteries électriques et une unité électronique de cumul de l'énergie consommée.

18. Système de balise selon l'une quelconque des revendications précédentes, **caractérisé en ce que** le support (1) de la balise (2) est équipé d'un détecteur de pression connecté électriquement à l'unité électronique de gestion (10) et à un transducteur électro-acoustique activé par ladite unité électronique de gestion (10) si une pression anormale est détectée.

## Patentansprüche

1. Automatisches Notrufbakensystem, das dazu bestimmt ist, ein Luftfahrzeug, ein Schiff und andere Fahrzeuge auszustatten, das einen Träger (1), der vorgesehen ist, starr an der Struktur des Luftfahrzeugs befestigt zu werden, und eine Bake (2) enthält, die vorgesehen ist, lösbar auf diesen Träger (1) montiert zu werden, wobei der Träger (1) eine elektronische Verwaltungseinheit (10) enthält, die mit einer ersten Verbindungseinrichtung (11) mit dem Daten- und Steuerbus (121) des Luftfahrzeugs versehen ist, um Daten von diesem Bus sowie Aktivierungsbefehle der Bake (2) zu empfangen, und **dadurch gekennzeichnet, dass** die elektronische Verwaltungseinheit mit einer zweiten Verbindungseinrichtung (12) mit der Bake (2) versehen ist, um Daten und Aktivierungsbefehle an sie zu übertragen, und **dadurch gekennzeichnet, dass** die Bake (2) mit mindestens einem Speichermodul (22) zum Speichern der übertragenen Daten und mit einem Funksendemodul (26) versehen ist, das über den Träger (1) mit einer äußeren Sendeantenne (122) des Luftfahrzeugs verbunden werden kann.

2. Bakensystem nach dem vorhergehenden Anspruch, **dadurch gekennzeichnet, dass** der Träger (1) mindestens eine mit der elektronischen Verwaltungseinheit (10) verbundene Einrichtung zur Erfassung anormaler Ereignisse aufweist, um die Bake (2) zu aktivieren.

3. Bakensystem nach Anspruch 1, **dadurch gekennzeichnet, dass** die elektronische Verwaltungseinheit (10) ein Aktivierungsmodul (15) der Bake (2), ein Datenübertragungsmodul (13), das die Schnittstelle mit dem Datenbus (121) gewährleistet, und ein Versorgungsmodul (14) mit elektrischer Energie enthält.

4. Bakensystem nach einem der vorhergehenden Ansprüche, **dadurch gekennzeichnet, dass** die oder jede zur Ausstattung des Trägers (1) gehörende Erfassungseinrichtung anormaler Ereignisse einen Aufprallsensor (16) enthält, wobei dieser Sensor mit dem Aktivierungsmodul (15) verbunden ist.

5. Bakensystem nach dem vorhergehenden Anspruch, **dadurch gekennzeichnet, dass** der Aufprallsensor (16) ein ausrichtbarer Beschleunigungskontakt ist.

6. Bakensystem nach einem der vorhergehenden Ansprüche, **dadurch gekennzeichnet, dass** der Träger (1) einen elektroakustischen Wandler enthält, der mit dem Aktivierungsmodul (15) verbunden ist.

7. Bakensystem nach einem der vorhergehenden Ansprüche, **dadurch gekennzeichnet, dass** der Träger (1) von einer der Energiequellen des Fahrzeugs mit elektrischer Energie versorgt wird.

8. Bakensystem nach einem der Ansprüche 1 bis 6, **dadurch gekennzeichnet, dass** der Träger (1) mit seiner eigenen Quelle elektrischer Energie versehen ist.

9. Bakensystem nach einem der vorhergehenden Ansprüche, **dadurch gekennzeichnet, dass** die Bake (2) mit Einrichtungen zur manuellen Auslösung eines Notfallsignals versehen ist.

10. Bakensystem nach Anspruch nach einem der vorhergehenden Ansprüche, **dadurch gekennzeichnet, dass** die Bake (2) außerdem eine Steuer- und Recheneinheit (21) enthält, mit der das Speichermodul (22) elektrisch verbunden ist.

11. Bakensystem nach einem der vorhergehenden Ansprüche, **dadurch gekennzeichnet, dass** die Bake (2) eine ihr eigene Identifizierungseinrichtung (27) aufweist, und der Träger (1) eine ihm eigene Identifizierungseinrichtung (17) aufweist.

12. Bakensystem nach den Ansprüchen 10 und 11 in ihrer Gesamtheit, **dadurch gekennzeichnet, dass** die Bake (2) außerdem ein Identifizierungsmodul (23) aufweist, das die in der Identifizierungseinrichtung (27) der Bake (2) enthaltenen Informationen lesen kann und, wenn diese Bake (2) sich auf dem Träger (1) befindet, die in der Identifizierungseinrichtung (17) des Trägers (1) enthaltenen Informationen lesen kann, wobei das Identifizierungsmodul (23) elektrisch mit der Steuer- und Recheneinheit (21) verbunden ist.

13. Bakensystem nach einem der Ansprüche 9 bis 11, **dadurch gekennzeichnet, dass** die Bake (2) mit einem mit der Steuer- und Recheneinheit (21) verbundenen Geolokalisierungsmodul (24) ausgestattet ist, das die geographischen Koordinaten des Fahrzeugs oder der Bake anzeigen kann.

14. Bakensystem nach einem der Ansprüche 9 bis 12, **dadurch gekennzeichnet, dass** die Bake (2) mit einer Mensch-Maschine-Schnittstelle (25) ausgestattet ist, die aus einem Anzeigebildschirm und einer Tastatur besteht, wobei die Mensch-Maschine-Schnittstelle mit der Steuer- und Recheneinheit (21) verbunden ist.

15. Bakensystem nach den Ansprüchen 9 bis 14 in ihrer Gesamtheit, **dadurch gekennzeichnet, dass** die Einrichtungen zur manuellen Auslösung der Bake aus einer zugeordneten Taste der Tastatur der Mensch-Maschine-Schnittstelle (25), aus der Mensch-Maschine-Schnittstelle (25) und aus der Steuer- und Recheneinheit (21) bestehen, die fähig ist, sobald sie das Drücken der dem Auslösen des Notfallsignals zugeordneten Taste erfasst, das Funksendemodul (26) zum Senden eines Notfallsignals zu aktivieren, im Speichermodul (22) die Daten bezüglich der geographischen Koordinaten der Bake (2) zu lesen, und mittels des Identifizierungsmoduls (23) den Identifizierungscode der Bake (2) zu lesen, der in der Identifizierungseinrichtung (27) enthalten ist, damit das gesendete Notfallsignal die geographischen Koordinaten der Bake (2) und den Identifizierungscode dieser Bake (2) enthält.

16. Bakensystem nach einem der Ansprüche 9 bis 15, **dadurch gekennzeichnet, dass** die Bake (2) mit einer Wasserwarnsonde ausgestattet ist, die elektrisch mit der Steuer- und Recheneinheit (21) verbunden ist.

17. Bakensystem nach einem der Ansprüche 9 bis 16, **dadurch gekennzeichnet, dass** die Bake einen Energieblock (30) enthält, der eine oder mehrere elektrische Batterien und eine elektronische Kumulierungseinheit der verbrauchten Energie enthält.

18. Bakensystem nach einem der vorhergehenden Ansprüche, **dadurch gekennzeichnet, dass** der Träger (1) der Bake (2) mit einem Druckdetektor ausgestattet ist, der elektrisch mit der elektronischen Verwaltungseinheit (10) und mit einem elektroakustischen Wandler verbunden ist, der von der elektronischen Verwaltungseinheit (10) aktiviert wird, wenn ein anormaler Druck erfasst wird.

## Claims

1. An automatic distress beacon system configured to equip an aircraft, a ship and other vehicles comprising a base unit (1) configured to be rigidly fixed to the structure of the aircraft, and a beacon (2) configured to be releasably mounted on this base unit (1), which base unit (1) comprises an electronic management unit (10) having a first means of connection (11) to the data and control bus (121) of the aircraft for receiving data from this bus together with commands for activation of the beacon (2) and **characterized in that** the electronic management unit is equipped with a second means of connection (12) to the beacon (2) for transmitting to it data and activation commands and **characterized in that** said beacon (2) being equipped with at least one memory module (22) for storing the transmitted data and with a radio transmission module (26) designed to be connected via the base unit (1) to an external transmission antenna of the aircraft (122).

2. The beacon system according to the preceding claim, **characterized in that** the base unit (1) comprises at least one means for detecting abnormal events connected to the electronic management unit (10), to activate the beacon (2).

3. The beacon system as claimed in claim 1, **characterized in that** the electronic management unit (10) comprises an activation module (15) of the beacon (2), a data communication module (13) providing the interface with the data bus (121) and an electrical power supply module (14).

4. The beacon system as claimed in one of the preceding claims, **characterized in that** the or each means for detecting abnormal events equipping the base unit (1) comprises an impact detector (16), this detector being connected to the activation module (15).

5. The beacon system according to the preceding claim, **characterized in that** the impact detector (16) is an orientable accelero-contact sensor.

6. The beacon system as claimed in any one of the preceding claims, **characterized in that** the base unit (1) contains an electro-acoustic transducer connected to the activation module (15).

7. The beacon system as claimed in any one of the preceding claims, **characterized in that** the base unit (1) is supplied with electrical power by one of the power sources of the vehicle.

8. The beacon system as claimed in any one of claims 1 to 6, **characterized in that** the base unit (1) is equipped with its own source of electrical power.

9. The beacon system as claimed in any one of the preceding claims, **characterized in that** the beacon (2) is equipped with means for manually triggering a distress signal.

10. The beacon system as claimed in any one of the preceding claims, **characterized in that** the beacon (2) furthermore comprises a control and processing unit (21) to which the memory module (22) is electrically connected.

11. The beacon system as claimed in any one of the preceding claims, **characterized in that** the beacon (2) comprises a means of identification (27) specific to it, and the base unit (1) comprises a means of identification (17) specific to it.

12. The beacon system as claimed in claims 10 and 11 taken together, **characterized in that** the beacon (2) further comprises an identification module (23) designed to read the information contained in the means of identification (27) of the beacon (2) and, when this beacon (2) is installed on the base unit (1), designed to read the information contained in the means of identification (17) of the base unit (1), said identification module (23) being electrically connected to the control and processing unit (21).

13. The beacon system as claimed in any one of claims 9 to 11, **characterized in that** the beacon (2) is equipped with a global positioning module (24) connected to the control and processing unit (21), designed to indicate the geographical coordinates of the vehicle or of the beacon.

14. The beacon system as claimed in any one of claims 9 to 12, **characterized in that** the beacon (2) is equipped with a man-machine interface (25) composed of a display screen and a keyboard, said man-machine interface being connected to the control and processing unit (21).

15. The beacon system as claimed in claims 9 to 14 taken together, **characterized in that** the means for manually triggering the beacon are formed by a dedicated key on the keyboard of the man-machine interface (25), by said man-machine interface (25), and by the control and processing unit (21) which is designed, whenever it detects the key dedicated to the triggering of the distress signal being pressed, to activate the radio transmission module (26) with a view to transmitting a distress signal, to read in the memory module (22) the data relating to the geographical coordinates of the beacon (2), and by means of the identification module (23), to read the code for identification of the beacon (2) contained in the means of identification (27), in order for the transmitted distress signal to contain the geographical coordinates of the beacon (2) and the code for identification of this beacon (2).

16. The beacon system as claimed in any one of claims 9 to 15, **characterized in that** the beacon (2) is equipped with a water detector electrically connected to the control and processing unit (21).

17. The beacon system as claimed in any one of claims 9 to 16, **characterized in that** the beacon comprises a power block (30) comprising one or more electrical batteries and an electronic unit for cumulating the energy consumed.

18. The beacon system as claimed in any one of the preceding claims, **characterized in that** the base unit (1) of the beacon (2) is equipped with a pressure detector electrically connected to the electronic management unit (10) and to an electro-acoustic transducer activated by said electronic management unit (10) if an abnormal pressure is detected.
